# EUROPÄISCHE PATENTSCHRIFT

(11) **EP 2 279 480 B1**
(45) Veröffentlichungstag und Bekanntmachung des Hinweises auf die Patenterteilung: **29.06.2016**
(21) Anmeldenummer: 09761528.0
(22) Anmeldetag: 24.03.2009
(51) Int. Cl.: G06F 21/55

(54) **VERFAHREN UND SYSTEM ZUM ÜBERWACHEN EINES SICHERHEITSBEZOGENEN SYSTEMS**
METHOD AND SYSTEM FOR MONITORING A SECURITY-RELATED SYSTEM
PROCÉDÉ ET SYSTÈME DE SURVEILLANCE D'UN SYSTÈME RELATIF À LA SÉCURITÉ

(30) Priorität: 28.05.2008 DE 102008025489
(43) Veröffentlichungstag der Anmeldung: 02.02.2011
(73) Patentinhaber: Siemens Aktiengesellschaft, 80333 München (DE)
(72) Erfinder: ROTHBAUER, Stefan, 85391 Allershausen (DE); KARL, Harald, 90765 Fürth (DE); PORSCH, Roland, 95469 Speichersdorf (DE)
(86) Internationale Anmeldenummer: PCT/EP2009/053401
(87) Internationale Veröffentlichungsnummer: WO 2009/149965

(56) Entgegenhaltungen:
- WO-A-2008/001322

## Beschreibung

Die Erfindung betrifft ein Verfahren und ein System zum Überwachen zumindest eines Prozesses, der in einem sicherheitsbezogenen System, insbesondere in einem elektrischen, elektronischen oder programmierbaren elektronischen (E/E/PE)-System, eingebunden ist.

Vorrichtungen oder Anlagen stellen nicht selten eine Gefahr für den Menschen dar. Dabei hängt die Gefährdung oft von der Funktionsweise der jeweiligen Vorrichtung oder Anlage ab. In der Regel werden Vorrichtungen oder Anlagen mit elektrischen oder elektronischen Systemen gesteuert. Solche (sicherheitsbezogenen) Systeme sind letztlich dafür verantwortlich, dass der Mensch keiner Gefahr ausgesetzt ist. Es werden daher an die sicherheitsbezogenen Systeme hohe Sicherheitsanforderungen gestellt, die sich z.B. aus dem Risiko ergeben, das für die involvierte Person besteht. So werden zum Beispiel üblicherweise vorbestimmte Normen, Regeln und/oder Richtlinien aufgestellt, welche die jeweiligen sicherheitsbezogenen Systeme erfüllen müssen. Als ein Beispiel einer solchen Norm kann die EN 50128 genannt werden. Diese ist eine Europäische Norm für sicherheitsbezogene Software der Eisenbahn und betrifft Bahnanwendungen in Bezug auf Telekommunikationstechnik, Signaltechnik sowie Datenverarbeitungssysteme und Software für Eisenbahnsteuerungs- und Überwachungssysteme.

WO 2008/00 1322 beschreibt eine Handhobung von benachrichtigungen auf einer mobilen Vorrichtung.

Um eine Sicherheitsfunktionalität in sicherheitsbezogenen Systemen zu implementieren, ist es notwendig, nachzuweisen, dass alle an der Sicherheitsfunktionalität beteiligten Komponenten und Module ihre jeweilige Funktionalität ausreichend sicher ausführen. Das heißt, die Einhaltung der vorbestimmten Normen, Regeln und/oder Richtlinien ist über alle Ebenen und Schichten eines Systems notwendig. Dabei bedarf es einer ständigen Überwachung des Systems und einer ständigen Überprüfung der an der Sicherheitsfunktionalität beteiligten Komponenten, Module und Prozesse. Diese Überwachung wird üblicherweise im Rahmen einer Zertifizierung des sicherheitsbezogenen Systems durchgeführt. Durch die Zertifizierung wird nachgewiesen, dass alle vorbestimmten Standards, das heißt Normen, Regeln und/oder Richtlinien eingehalten werden und dass (End-) Ergebnisse der durchgeführten Vorgänge oder Prozesse in dem sicherheitsbezogenen System die nötigen oder die gemäß dem jeweiligen Standard entsprechenden Eigenschaften aufweisen.

Um mögliche Fehlerquellen zu vermeiden, werden bisher sowohl Hardware als auch Software in diesem sicherheitsrelevanten Bereich minimalistisch, d.h. nur auf das Notwendigste reduziert, gestaltet. Die Betriebssysteme werden für die jeweilige spezielle Hardware speziell implementiert. Dabei werden Einschränkungen hinsichtlich der Ausgestaltungen der Betriebssysteme, Software und/oder Hardware in Kauf genommen.

Ferner sind die implementierten Betriebssysteme auf einen konkreten Anwendungsfall ausgerichtet. Möchte man z.B. ein bestehendes Betriebssystem für einen weiteren Anwendungsfall wiederverwenden, so ist dies aufgrund der sehr spezifischen Ausrichtung des entsprechenden Betriebssystems herkömmlicherweise nicht möglich. Zudem besteht nicht selten auch eine Gebundenheit an die eingesetzten Komponenten, die im Rahmen des entsprechenden Betriebssystems gesteuert werden.

Beispielsweise hat ein für den Flugzeugbereich oder für Industrieanwendungen spezifiziertes Betriebssystem einen sehr genau definierten Funktionsumfang. Das Betriebssystem ist z.B. für die Bedürfnisse der Flugzeugindustrie ausgelegt. Eine Anpassung an ein weiteres Einsatzgebiet, wie z.B. die Eisenbahn, ist dann nicht möglich.

Ferner sind auch die Architekturen der bekannten sicherheitsbezogenen Systeme durch die Spezifität ihrer Komponenten, Betriebssysteme und Prozesse geprägt. Möchte man nun ein solches sehr spezifisch aufgebautes sicherheitsbezogenes System auf sein korrektes Funktionieren hin überprüfen, bzw. überwachen, so bedarf es einer Überwachung, die exakt auf das speziell eingerichtete sicherheitsbezogene System ausgerichtet und für dieses ausgestaltet ist.

Es besteht somit ein Bedarf für eine generische Zertifizierung von sicherheitsbezogenen Systemen. Dabei benötigt man eine durchgehende Zertifizierung, d.h. einer Zertifizierung, die über alle Ebenen und Schichten des sicherheitsbezogenen Systems, d.h. bis zur Betriebssystemebene reicht. Eine solche generische Zertifizierung bis zur Betriebssystemebene, d.h. eine Zertifizierung von Hardware und Software einschließlich dem Betriebssystem ist bisher nicht bekannt.

Der Erfindung liegt die Aufgabe zugrunde, eine flexible und generische Zertifizierung von sicherheitsbezogenen Systemen zu ermöglichen.

Die Aufgabe wird durch ein Verfahren mit den Merkmalen des unabhängigen Anspruchs 1, durch eine Vorrichtung mit den Merkmalen des unabhängigen Anspruchs 10, durch ein Computerprogramm mit den Merkmalen des unabhängigen Anspruchs 11 oder durch einen Datenträger mit den Merkmalen des unabhängigen Anspruchs 13 gelöst.

Die Erfindung schafft ein Verfahren zum Überwachen eines sicherheitsbezogenen Systems, wobei das Verfahren die folgenden Schritte aufweist:
- Übermitteln eines Überwachungsergebnisses eines ersten Prozesses von einer Überwachungsvorrichtung, die zum Überwachen des sicherheitsbezogenen Systems vorgesehen ist, an eine Vorrichtung, die zumindest einen Teil des sicherheitsbezogenen Systems bildet;
- Auswerten des Überwachungsergebnisses durch einen zweiten Prozess, wobei der zweite Prozess einen Prozess des sicherheitsbezogenen Systems bildet;
- Berechnen eines Bearbeitungsergebnisses in Abhängigkeit von dem Überwachungsergebnis; und
- Überprüfen des berechneten Überwachungsergebnisses.

Zum Überwachen des sicherheitsbezogenen Systems wird der erste Prozess auf der Überwachungsvorrichtung ausgeführt. Der erste Prozess ist dabei derart ausgestaltet, dass der zweite Prozess durch den ersten Prozess überwachbar ist, d.h., der erste Prozess ist derart ausgestaltet, dass durch den ersten Prozess überprüfbar ist, ob der zweite Prozess korrekt abläuft. Dabei kann durch den ersten Prozess geprüft werden, ob beispielsweise der zweite Prozess korrekte bzw. richtige Ergebnisse liefert, die richtigen Vorgänge, Schritte oder Funktionen ausführt und/oder noch ausgeführt wird.

Das sicherheitsbasierte System kann gemäß einer vorteilhaften Ausführungsform aus mehreren Schichten, d.h. zumindest einer Schicht, aufgebaut sein. Der zweite überwachte Prozess ist in diesem Fall ein Prozess einer der Schichten des sicherheitsbezogenen Systems. Das sicherheitsbezogene System kann beispielsweise zumindest eine der folgenden Schichten aufweisen:
- eine Applikations-Schicht, welche vorteilhaft derart ausgestaltet sein kann, dass anwendungsspezifische Funktionen ausführbar sind;
- eine Schicht der Middleware;
- eine Schicht des Betriebssystems; oder
- eine Hardwareschicht.

Durch eine derart zum Überwachen des sicherheitsbezogenen Systems vorteilhaft ausgestaltete Überwachungsvorrichtung sind mehrere Schichten gebündelt überwachbar.

Als Betriebssystem kann gemäß einer weiteren vorteilhaften Ausführungsform der vorliegenden Erfindung ein Open Source Betriebssystem, wie z.B. Linux, verwendet werden.

Der Einsatz eines Open Source Betriebssystems erlaubt eine flexible und generische Zertifizierung von sicherheitsbezogenen Systemen. Open Source Betriebssysteme (z.B. Linux) sind frei verfügbar und in ihrer Gestaltung transparent, d.h. sie bieten eine anpassungsfähige und wiederverwendbare Grundlage für eine Zertifizierung von sicherheitsbezogenen Systemen.

Die Entwicklung von Open Source Betriebssystemen, wie Linux, wird öffentlich betrieben. Dadurch werden Open Source Betriebssysteme vielseitigen Tests unterzogen und erfüllen vorgegebene Sicherheitsstandards, während einige speziell entwickelte Betriebssystemen, die nach außen nicht transparent sind, in vielen Fällen keine derartige so testintensive und sicherheitsbewusste Entwicklung erfahren. Somit bietet ein Einsatz von Open Source Betriebssystemen neben dem Vorteil der Anpassungsfähigkeit und der Wiederverwendungsfähigkeit, oft auch den Vorteil der Erfüllung eines hohen Sicherheitsstandards.

Neben der Verwendung des gesamten Open Source Betriebssystems, d.h. aller Module des Open Source Betriebssystems, ist es gemäß einer vorteilhaften, Ausführungsform möglich, für eine Anwendung relevante Module eines Open Source Betriebssystems auszuwählen bzw. zu bestimmen und nur diese vorbestimmten Module des Open Source Betriebssystems im Rahmen eines generisch zertifizierten Systems einzusetzen. Wird beispielsweise Linux als Open Source Betriebssystem eingesetzt, so ist es möglich, sowohl das gesamte Betriebssystem als auch (für die Anwendung) gezielt ausgewählte Packages (Module) des Betriebssystems Linux zu verwenden. Durch eine solche Vorauswahl werden einerseits potentielle Fehlerquellen vermieden und die Anzahl von Test- bzw. Überwachungsfunktionen reduziert und andererseits wird auch der für die Module des Open Source Betriebssystems benötigte Speicherplatz durch die Vorauswahl reduziert. Dies ermöglicht eine flexible Gestaltung der Zertifizierung von sicherheitsbezogenen Systemen.

Das sicherheitsbezogene System bzw. die Schichten des sicherheitsbezogenen Systems, wie z.B. die Schicht des Open Source Betriebssystems, wird bzw. werden durch eine speziell hierfür entwickelte Software überwacht. Dabei werden Überwachungsprozesse, die zum Überwachen von Prozessen des sicherheitsbezogenen Systems vorgesehen sind, (zum Beispiel von Prozessen des in einem sicherheitsbezogenen System vollständig oder teilweise eingebunden Open Source Betriebssystems), verwaltet, angestoßen und Ergebnisse der Überwachungsprozesse von zumindest einem Prozess des sicherheitsrelevanten Systems (z.B. des Open Source Betriebssystems, wenn die Schicht des Betriebssystems überwacht wird) bearbeitet. Die Ergebnisse der Bearbeitung durch Prozesse des sicherheitsrelevanten Systems werden überprüft, wodurch erkannt wird, ob das sicherheitsbezogene System korrekt arbeitet oder ob Störungen eingetreten sind.

Wie bereits erwähnt, wird gemäß dem vorliegenden erfindungsgemäßen Verfahren ein zweiter Prozess durch einen ersten Prozess überwacht. Der erste Prozess ist somit dem zweiten Prozess übergeordnet, so dass ein gezieltes Zertifizieren von sicherheitsbezogenen Systemen ermöglicht wird.

Dabei wird bei einer vorteilhaften Ausführungsform der erste Prozess aus einer Menge von Prozessen ausgewählt, die in der für das Überwachen ausgestalteten Vorrichtung gespeichert sind. Diese Menge von ersten Prozessen bzw. Überwachungsprozessen ist frei gestaltbar. Die Überwachungsprozesse weisen generelle Überwachungsprozesse, die das Überprüfen oder Kontrollieren allgemeiner Abläufe oder Prozesse des sicherheitsbezogenen Systems oder der Schichten des sicherheitsbezogenen Systems (wie z.B. der des Open Source Betriebssystems) ermöglichen, und/oder anwendungsspezifische Überwachungsprozesse auf. Somit wird eine Flexibilität hinsichtlich der Überwachung bzw. Zertifizierung von sicherheitsbezogenen Systemen gewährleistet.

Ferner kann das Bearbeiten eines Überwachungsergebnisses bzw. einer Challenge innerhalb einer vorbestimmten Zeit erwartet werden. Dabei wird das Bearbeiten des Überwachungsergebnisses abgebrochen und ein erneutes Bearbeiten des Überwachungsergebnisses durch den zweiten Prozess durchgeführt, wenn das Bearbeiten des Überwachungsergebnisses nicht innerhalb der vorbestimmten Zeit erfolgt ist. Es besteht somit eine weitere Chance für die Überwachung, da es sein kann, dass eine kurzzeitige Überlastung das System verlangsamt hatte und dass somit kein sofortiges Eingreifen bzw. keine sofortigen Maßnahmen zur Gefahrenvermeidung notwendig sind. Das Feststellen, ob das Bearbeiten des Überwachungsergebnisses innerhalb der vorbestimmten Zeit erfolgt ist, kann in der Überwachungsvorrichtung und/oder in der überwachten Vorrichtung durchgeführt werden.

Das Überprüfen des Bearbeitungsergebnisses bzw. der Response kann in der Überwachungsvorrichtung durchgeführt werden. Dabei wird das Bearbeitungsergebnis vorher von der überwachten Vorrichtung, die das zumindest eine Modul des Open Source Betriebssystems aufweist, an die Überwachungsvorrichtung übertragen.

Ferner kann das Bearbeiten des Überwachungsergebnisses in einem Anwenden einer Funktion des überwachten Prozesses auf das Überwachungsergebnis bzw. die Challenge bestehen. In einem solchen Fall kann das Bearbeitungsergebnis dem Ergebnis der Funktion des überwachten Prozesses entsprechen.

Gemäß einer Ausführungsform des vorliegenden erfindungsgemäßen Verfahrens kann das Überprüfen des Bearbeitungsergebnisses ein Kontrollieren des Bearbeitungsergebnisses durch den ersten Prozess umfassen.

Ferner kann das sicherheitsbezogene System angehalten werden, wenn das Überprüfen des Bearbeitungsergebnisses ergibt, dass das Bearbeitungsergebnis falsch ist, um das sicherheitsbezogene System einer möglichen Gefährdung zu entziehen.

Gemäß einem vorteilhaften Ausführungsbeispiel der vorliegenden Erfindung kann als die erste, zum Überwachen ausgestaltete überwachte Vorrichtung ein sogenannter Safety and Environment Prozessor (SEP) eingesetzt werden. Als zweite Vorrichtung, die das zumindest eine Modul des Open Source Betriebssystems aufweist, kann zum Beispiel ein Hauptprozessor vorgesehen sein.

Die Erfindung schafft ferner ein System mit einer Vorrichtung, welche zum Überwachen eines sicherheitsbezogenen Systems ausgestaltet ist und welche ferner derart ausgestaltet ist, dass ein Überwachungsergebnis bzw. ein Challenge eines ersten Prozesses an eine weitere Vorrichtung, die zumindest einen Teil des sicherheitsbezogenen Systems bildet, übertragbar ist, wobei die weitere Vorrichtung das Überwachungsergebnis durch einen zweiten Prozess, welcher ein Prozess des sicherheitsbezogenen Systems ist, auswertet und ein Bearbeitungsergebnis bzw. eine Response bereitstellt.

Die weitere Vorrichtung kann einen Teil des sicherheitsbezogenen Systems bilden oder auch das gesamte sicherheitsbezogene System umfassen.

Der erste Prozess ist vorzugsweise derart ausgestaltet, dass der zweite Prozess durch den ersten Prozess überwachbar ist, d.h. der erste Prozess ist dem zweiten Prozess übergeordnet.

Zum Überwachen des sicherheitsbezogenen Systems wird der erste Prozess auf der Überwachungsvorrichtung zum Überwachen eines sicherheitsbezogenen Systems ausgeführt.

Wie oben erläutert, kann das sicherheitsbezogene System mehrere Schichten aufweisen. Im Falle, dass eine Schicht des Betriebssystems gegeben ist, kann als Betriebssystem gemäß einem vorteilhaften Ausführungsform der erfindungsgemäßen Vorrichtung ein Open Source Betriebssystem (wie z.B. Linux) eingesetzt werden.

Bei einer Ausführungsform der erfindungsgemäßen Vorrichtung kann die Vorrichtung zum Überwachen des sicherheitsbezogenen Systems eine Menge von Prozessen aufweisen und derart ausgestaltet sein, dass der erste Prozess aus der Menge von Prozessen bestimmbar ist.

Ferner kann die Vorrichtung derart vorteilhaft ausgestaltet sein, dass das Bearbeitungsergebnis bzw. die Response überprüfbar ist. Dabei kann der erste Prozess im Rahmen des Überprüfens derart ausgestaltet sein, dass das Bearbeitungsergebnis durch den ersten Prozess kontrollierbar ist.

Wenn das Bearbeitungsergebnis bzw. die Response falsch ist, kann die Vorrichtung zum Überwachen des sicherheitsbezogenen Systems derart vorteilhaft ausgestaltet sein, dass das sicherheitsbezogene System anhaltbar ist.

Zusätzlich kann die Vorrichtung zum Überwachen des sicherheitsbezogenen Systems derart vorteilhaft ausgestaltet sein, dass das Bearbeitungsergebnis von der weiteren Vorrichtung empfangbar ist.

Wie bereits erläutert, kann die Vorrichtung zum Überwachen des sicherheitsbezogenen Systems beispielsweise ein Safety and Environment Prozessor (SEP)sein. Die weitere Vorrichtung, die zumindest einen Teil des sicherheitsbezogenen Systems aufweist, kann ein MCP (Main Control Processor) bzw. ein Hauptprozessor sein.

Gemäß einem vorteilhaften Ausführungsbeispiel der vorliegenden Erfindung kann die Vorrichtung derart ausgestaltet sein, dass das Überwachungsergebnis bzw. die Challenge innerhalb einer vorbestimmten Zeit durch den zweiten Prozess bearbeitbar ist. Dabei kann die Vorrichtung derart vorteilhaft ausgestaltet sein, dass das Bearbeiten des Überwachungsergebnisses abbrechbar ist und das Überwachungsergebnis durch den zweiten Prozess erneut bearbeitbar ist, wenn das erste Ergebnis nicht innerhalb der vorbestimmten Zeit bearbeitet wird. Ferner kann der zweite Prozess derart vorteilhaft ausgestaltet sein, dass auf das Überwachungsergebnis bzw. die Challenge eine Funktion des zweiten Prozesses anwendbar ist.

Gemäß einem vorteilhaften Ausführungsbeispiel der vorliegenden Erfindung kann die Vorrichtung, die zumindest einen Teil des sicherheitsbezogenen Systems aufweist, derart ausgestaltet sein, dass das Bearbeitungsergebnis bzw. die Response an die Überwachungsvorrichtung übertragbar ist.

Die oben genannte Aufgabe wird auch durch ein Computerprogramm gelöst, das eine Kodierung aufweist, die derart ausgestaltet ist, dass die Schritte des oben skizzierten und nachstehend genauer beschriebenen Verfahrens ausführbar sind. Das Computerprogramm kann dabei gemäß einem vorteilhaften Ausführungsbeispiel der vorliegenden Erfindung auf einem Datenträger speicherbar sein. Schließlich wird die vorstehend genannte Aufgabe auch durch einen Datenträger gelöst, der das oben genannte Computerprogramm aufweist.

Die erfindungsgemäße Überwachung stellt aufgrund der vorgesehenen Softwareschicht eine laufende Prüfung sicher. Die Überprüfungen oder Kontrollen des korrekten Betriebs des sicherheitsbezogenen Systems werden teilweise auf separater Hardware (wie z.B. watchdog oder Safety and Environment Processor (SEP)) vorgenommen. Durch hinreichend komplexe Anforderungen, die in die Überwachungsprozesse integriert sind, wird sichergestellt, dass sowohl ein komplettes Versagen, d.h. wenn alle Systemressourcen gebunden sind oder ein Speicherüberlaufauftritt, als auch kleinere Fehler des sicherheitsbezogenen Systems wahrscheinlich erkannt werden (Challenge - Response, Tasküberwachung, u.a.).

Das Zusammenspiel von Hardware (z.B. SEP) und Software, die das sicherheitsbezogene System überwacht, stellt eine für die Sicherheitsintegritätsstufe (wie z.B. SIL 1) hinreichende Fehleraufdeckung sicher.

Durch die vorliegende Erfindung wird ferner sichergestellt, dass Applikationen sich auf die vom Betriebssystem zur Verfügung gestellten Funktionen stützen können. Die Sicherheitsfunktionalität muss somit nicht anwendungsabhängig bzw. applikativ gesichert werden.

Im Folgenden wird die Erfindung detailliert unter Bezugnahme auf die in der beigefügten Zeichnung dargestellten Ausführungsbeispiele beschrieben.

Es zeigen:
- Fig. 1: ein System zum Überwachen eines sicherheitsbezogenen Systems gemäß einem Ausführungsbeispiel der vorliegenden Erfindung; und
- Fig. 2: ein sicherheitsbezogenes System, das mehrere Schichten aufweist und das gemäß einem Ausführungsbeispiel der vorliegenden Erfindung überwacht wird.

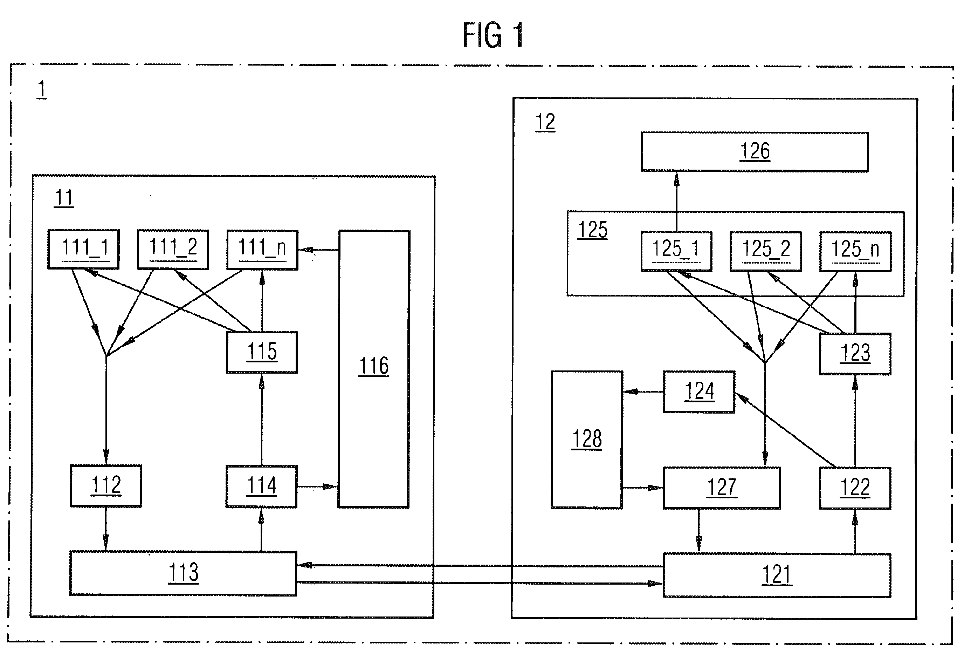

Ein in Fig. 1 dargestelltes System bildet ein System 1 zum Überwachen eines sicherheitsbezogenen Systems 2. Dabei weist eine Betriebssystemschicht zumindest ein Modul eines Open Source Betriebssystems auf, das in einem sicherheitsbezogenen System 2 eingebunden ist. Das Open Source Betriebssystem ist gemäß dem vorliegenden Ausführungsbeispiel Linux. Bei dem sicherheitsbezogenen System 2 kann es sich um ein elektrisches, elektronisches oder um ein programmierbares elektronisches System (E/E/PE) handeln.

Ferner sind gemäß dem vorliegenden Ausführungsbeispiel nur bestimmte Module des gesamten Open Source Betriebssystems in der Betriebssystemschicht des Betriebssystems vorhanden. Es handelt sich dabei um Module, die für das sicherheitsbezogene System 2 notwendig sind, um sicherheitsrelevante Risiken durch weitere, nicht unbedingt erforderliche Module zu minimieren. Es kann auch das gesamte Open Source Betriebssystem verwendet werden.

Zur klareren und einfacheren Darstellung der vorliegenden Erfindung wird vorwiegend das Überwachen der Betriebssystemschicht beschrieben, d.h. das Überwachen zumindest eines Moduls von Linux. Es können in adäquater Weise auch weitere Schichten des sicherheitsbezogenen Systems 2 überwacht werden. Ferner kann das sicherheitsbezogene System 2 auch schichtenunabhängig überwacht werden.

Das Überwachungssystem 1 weist gemäß dem vorliegenden Ausführungsbeispiel zwei Vorrichtungen 11 und 12 auf, wobei die Vorrichtung 11 ein SEP (SEP: Safety and Environment Processor) bzw. Überwachungsprozessor ist und zum Überwachen zumindest eines Moduls von Linux eingerichtet ist. Die Vorrichtung 12 wird z.B. durch einen Hauptkontrollprozessor (Main Control Processor, MCP) und mindestens eine Modul von Linux gebildet. _Der Hauptkontrollprozessor 12 wird von dem SEP11 überwacht.

Der SEP 11 weist eine Menge von Überwachungsprozessen 111_1, 111_2 bis 111_n auf, welche konfiguriert sind, Prozesse 125_1, 125_2 bis 125_n des Betriebssystems Linux zu überwachen. Die Überwachungsprozesse 111_1, 111_2 bis 111_n bilden übergeordnete Prozesse der Linux-Prozesse 125_1, 125_2 bis 125_n.

Gemäß dem vorliegenden Ausführungsbeispiel hat jeder zu überwachende Linux-Prozess 125_1, 125_2 bis 125_n einen Stellvertreter oder übergeordneten Prozess 111_1, 111_2 bis 111_n auf dem SEP 11, der für dessen Überwachung zuständig ist. Diese einfache Beziehung sollte aber nicht als einschränkend gesehen werden. Selbstverständlich ist es möglich, dass zumindest ein übergeordneter Prozess bzw. Überwachungsprozess 111_1, 111_2 bis 111_n mehrere Linux-Prozesse 125_1, 125_2 bis 125_n überwacht und dass ein Linux-Prozess 125_1, 125_2 bis 125_n von mehreren Überwachungsprozessen 111_1, 111_2 bis 111_n überwacht bzw. validiert wird.

Zunächst generiert ein Überwachungsprozess 111_1, 111_2 bis 111_n ein Überwachungsergebnis b bzw. eine Challenge (z.B. eine Zahl oder eine sonstige Datenstruktur). Dieses Überwachungsergebnis b wird gemäß dem vorliegenden Ausführungsbeispiel durch einen Paketkodierer 112 kodiert und über eine Schnittstelle 113, wie z.B. einen Universal Asynchronous Receiver Transmitter (UART), an eine Schnittstelle 121 des MCP 12 übermittelt. Das kodierte und übermittelte Überwachungsergebnis b wird innerhalb des MCP 12 an einen Paketdekodierer 122 weitergeleitet. Der Paketdekodierer 122 dekodiert das Ergebnis b der Überwachungsprozesses 111_1, 111_2 bis 111_n bzw. das Überwachungsergebnis an einen Dispatcher 123. Der Dispatcher 123 weist dann das übermittelte Überwachungsergebnis b an den entsprechenden zu überwachenden Linux-Prozess 125_1, 125_2 bis 125_n zur Bearbeitung weiter.

Das Auffinden, welcher Linux-Prozess 125_1, 125_2 bis 125_n von welchem Überwachungsprozess 111_1, 111_2 bis 111_n überwacht wird, kann beispielsweise durch Übertragung einer Identifikation (ID) des entsprechenden Überwachungsprozesses 111_1, 111_2 bis 111_n zusammen mit dem zugehörigen Überwachungsergebnis b erfolgen. Der Dispatcher 123 empfängt dann zusammen mit dem Überwachungsergebnis b auch die entsprechende ID des Linux-Prozesses 125 und kann das jeweilige Überwachungsergebnis b an den adressierten Linux-Prozess 125_1, 125_2 bis 125_n korrekt weiterleiten.

Die Linux-Prozesse 125_1, 125_2 bis 125_n werden im vorliegenden Ausführungsbeispiel von einem Linux Safety Manager (LSM) 125 verwaltet.

Der entsprechende Linux-Prozess 125_1, 125_2 bis 125_n empfängt das Ergebnis des Überwachungsprozesses 111_1, 111_2 bis 111_n und bearbeitet dieses Überwachungsergebnis b. Dabei entsteht ein weiteres Ergebnis, im Nachfolgenden als Bearbeitungsergebnis a bzw. Response bezeichnet. Dieses Bearbeitungsergebnis a kann ähnlich wie das Überwachungsergebnis b beispielsweise eine Zahl oder eine weitere einfache oder komplexe Datenstruktur sein.

Zur Bearbeitung des Überwachungsergebnisses b kann der Linux-Prozess 125_1, 125_2 bis 125_n zumindest eine vorgegebene individuelle Funktion anwenden. Dabei wird das Überwachungsergebnis b durch die Funktion verrechnet, d.h. es wird ein Funktionsergebnis einer vorgegebenen Funktion in Abhängigkeit von dem Überwachungsergebnis b berechnet und als Bearbeitungsergebnis a zwischengespeichert. Das Ergebnis der Ausführung der zumindest einen individuellen Funktion kann dann als das Bearbeitungsergebnis a dienen.

Zur Verdeutlichung der Entstehung des Bearbeitungsergebnisses a dient das folgende Beispiel:
Es wird beispielsweise ein Überwachungsprozess 111_n aus der Menge der Überwachungsprozesse zur Überwachung des MCP 12 und somit des Linux-Betriebssystems gewählt. Das Überwachungsprozess 111_n generiert eine Zahl b als Ergebnis bzw. Überwachungsergebnis. Das Überwachungsergebnis b wird von einem Linux-Prozess 125_n empfangen, da der Überwachungsprozess 111_n die Überwachung des Linux-Prozesses 125_n durchführt). Der Linux-Prozess 125_n verrechnet die Zahl b mit einer individuellen Funktion fn zu einem neuen Ergebnis a. Dieses Bearbeitungsergebnis a wird an den Überwachungsprozess 111_n zurückgeschickt. Der Überwachungsprozess 111_n überprüft dann mit der gleichen individuellen Funktion fn, ob die beiden Ergebnisse b und a zueinander passen. Ist dies der Fall, so befindet sich das sicherheitsbezogene System 2 in einem sicheren Zustand. Im umgekehrten Fall werden entsprechende sicherheitswahrende Maßnahmen eingeleitet, beispielsweise das vollständige Anhalten des sicherheitsbezogenen Systems.

Der LSM 125 ist für sicherheitsbezogene Funktionen auf der Ebene des Open Source Betriebssystems, hier Linux, vorgesehen. Diese Funktionen legen auch die Ausführung von Diensten des sicherheitsbezogenen Systems 2 fest, welche durch eine Applikation 126 der Dienste des sicherheitsbezogenen Systems 2 gesteuert und angeboten werden. Somit haben zumindest einige Linux-Prozesse Zugriff und Einfluss auf die Ausführung von Diensten bzw. Applikationen 126 des sicherheitsbezogenen Systems 2, wie zum Beispiel der Linux-Prozess 125_1 in Fig. 1. In diesem Fall, wenn der Linux-Prozess 125_1 getestet bzw. überwacht wird, wird zugleich auch die Ausführung des jeweiligen Dienstes durch die Applikation 126 getestet und auf ihren sicheren Ablauf hin überprüft. Auf diese Weise wird eine Zertifizierung durch alle Schichten eines sicherheitsbezogenen Systems 2 ermöglicht.

Liegt nun ein Bearbeitungsergebnis a vor, so wird dieses an einen Paketkodierer 127 des MCP 12 weitergeleitet. Der Paketkodierer 127 kodiert das Bearbeitungsergebnis a und leitet das kodierte Bearbeitungsergebnis a an die Schnittstelle 121 zum Übertragen und Empfangen von Daten weiter. Diese übermittelt das kodierte Bearbeitungsergebnis a an den SEP 11, bzw. an die Schnittstelle 113 des SEP. Von dort gelangt das kodierte Bearbeitungsergebnis a zum Paketdekodierer 114, wird dort dekodiert und an einen Dispatcher 115 weitergeleitet.

Der Dispatcher 115 ordnet das Bearbeitungsergebnis a dem entsprechenden Überwachungsprozess 111_1, 111_2 bis 111_n zu. Dies kann beispielsweise, wie oben bereits erläutert, mittels einer mitübertragenen ID erfolgen.

Der entsprechende Überwachungsprozess 111_1, 111_2 bis 111_n wertet das empfangene Bearbeitungsergebnis a aus, z.B. durch geeignete Auswertung oder durch geeigneten Vergleich des Überwachungsergebnisses b und des Bearbeitungsergebnisses a.

Fällt die Auswertung des Bearbeitungsergebnisses a durch den Überwachungsprozess 111_1, 111_2 bis 111_n positiv aus, so befindet sich das sicherheitsbezogene System 2 in einem sicheren Zustand. Ansonsten werden entsprechende das System wahrende Maßnahmen durchgeführt. Notfalls wird das vollständige Anhalten des sicherheitsbezogenen Systems 2 durch den SEP 11 des Überwachungssystems 1 veranlasst.

Es kann jedoch der Fall auftreten, dass der MCP 12 ausgelastet ist. Um einen solchen Fall abzufangen, kann für die Bearbeitung eines Überwachungsergebnisses durch einen Linux-Prozess 125_1, 125_2 bis 125_n eine Zeitdauerfestgelegt werden, innerhalb derer die Bearbeitung des Überwachungsergebnisses b zu erfolgen hat. Erfolgt die Bearbeitung des Überwachungsergebnisses b nicht innerhalb der vorbestimmten Zeit, kann ein weiterer Versuch für die Bearbeitung vorgesehen werden. Die bisherige Bearbeitung wird beendet und eine erneute Bearbeitung des Überwachungsergebnisses b gestartet. Ergibt auch die erneute Bearbeitung kein Ergebnis, so wird das sicherheitsbezogene System 2 in einen sicheren Zustand gebracht. Gegebenenfalls wird die Ausführung des sicherheitsbezogenen Systems 2 einfach beendet. Diese Überprüfung kann beispielsweise im MCP 12 durch die Komponenten SEP-Steuerung 124 und eine globale Sicherheitssteuerung (Global Safety Control, GSC) 128 erfolgen. Zur Überwachung erhält die SEP-Steuerung 124 von dem Paketdekodierer 122 die entsprechende ID des Überwachungsprozesses, wenn das dazugehörige Überwachungsergebnis im Paketdekodierer 122 ankommt. Das Anordnen der Überführung des Systems 2 in einen sicheren Zustand kann in dem MCP 12 durch die Sicherheitssteuerung 128 erfolgen.

Die allgemeine Sicherheitssteuerung auf der Seite des SEP 11 wird gemäß dem vorliegenden Ausführungsbeispiel von der Komponente Global Safety Control (GSC) 116, die das Ausführen von Überwachungsprozessen 111_1, 111_2 bis 111_n steuert und die Ergebnisse der Linux-Prozesse bzw. Bearbeitungsprozesse kontrolliert, durchgeführt. Das Anordnen der Überführung des Systems in einen sicheren Zustand kann im SEP 11 durch die GSC 116 erfolgen.

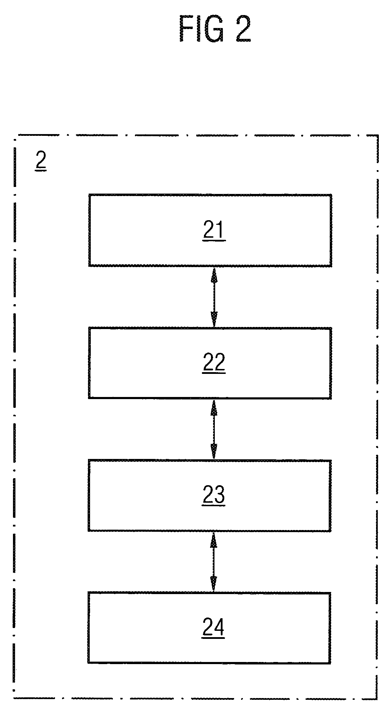

Fig. 2 zeigt ein sicherheitsbezogenes System 2, das mehrere Schichten 21, 22, 23, 24 aufweist und das gemäß einem vorteilhaften Ausführungsbeispiel der vorliegenden Erfindung überwacht wird.

Bei dem vorliegenden Ausführungsbeispiel weist das sicherheitsbezogene System 2 eine Applikationsschicht 21, eine Middleware-Schicht 22, die beispielsweise ein Kommunikationsframework ist, eine Betriebssystemschicht 23, beispielsweise ein Open Source Betriebssystem und eine Hardwareschicht 24 auf. Die jeweiligen Schichten 21, 22, 23 können wie oben dargestellt überwacht werden. Zwischen den Schichten erfolgt auch eine Kommunikation bzw. ein Datenaustausch, d.h. die Schichten beeinflussen, koordinieren, steuern und/oder kontrollieren einander. Diese Kommunikation ist in Fig. 2 durch Pfeile zwischen den Schichten dargestellt.

Dabei befindet sich das sicherheitsbezogene System 2 beispielsweise auf einem Hauptprozessor. Die Überwachung wird von einer überwachenden Vorrichtung, wie beispielsweise dem oben genannten SEP 11, überwacht.

Wird eine Überwachung der Applikationsschicht 21 durchgeführt, so können Softwaremodule oder Softwareprozesse der Applikationsschicht 21 überwacht werden. Während der Überwachung wird sichergestellt, dass die Applikationen korrekt laufen. Dabei kann auch auf ein korrektes Funktionieren oder auf einen korrekten Betrieb der darunterliegenden Schichten geschlossen werden.

In diesem Fall weist der SEP 11 unter anderem solche überwachende Prozesse auf, die zum Überwachen der Applikationsschicht 21 eingerichtet sind. Die Ergebnisse oder Daten dieser überwachenden Prozesse werden an die Applikationsschicht 21 auf dem Hauptprozessor übermittelt und dort von den jeweiligen Prozessen oder Modulen der Applikationsschicht 21 bearbeitet. Die durch die Bearbeitung entstandenen Ergebnisse oder Daten werden an den SEP 11 übertragen und von den überwachenden Prozessen auf deren Korrektheit hin überprüft bzw. kontrolliert.

Auf ähnliche Weise kann auch die Überwachung der Middleware-Schicht 22 durchgeführt werden.

Die Überwachung der Betriebssystem-Schicht 23 kann ebenfalls, wie oben beschrieben, durchgeführt werden.

Ferner können Prozesse beispielsweise auch dahingehend überwacht werden, ob diese noch "leben". Betrachtet man das Betriebssystem Linux, so können der überwachenden Vorrichtung 11 nach dem Start des sicherheitsbezogenen Systems 2 oder des Betriebssystems mittels des Befehls "grep" von Linux Identifikatoren der auf dem Linux laufenden Prozesse übertragen werden. Die überwachende Vorrichtung 11 kann solche Prozesse beispielsweise in einer Liste oder Tabelle initiieren. Im laufenden Betrieb des sicherheitsbezogenen Systems 2 kann dann überwacht werden, ob die Prozesse von Linux noch wie erwartet ablaufen, oder ob die Prozesse generell noch existieren, d.h. insbesondere in einem "lebenden" Zustand sind.

Somit bezieht sich die vorliegende Erfindung auf das Überwachen eines sicherheitsbezogenen Systems 2, insbesondere eines elektrischen, elektronischen oder programmierbar elektronischen (E/E/PE)-Systems. Dabei wird ein erstes Ergebnis b eines ersten Prozesses von einer ersten Vorrichtung 11, die zum Überwachen des sicherheitsbezogenen Systems 2 ausgestaltet ist, an eine zweite Vorrichtung 12, die zumindest einen Teil des sicherheitsbezogenen Systems 2 aufweist, übermittelt. Das erste Ergebnis b wird durch einen zweiten Prozess bearbeitet, wobei der zweite Prozess ein Prozess des sicherheitsbezogenen Systems 2 ist. Durch die Bearbeitung wird ein zweites Ergebnis a bereitgestellt. Anschließend wird das zweite Ergebnis a überprüft, um festzustellen, ob der zweite Prozess richtig funktioniert oder richtig betrieben wird und somit ob das sicherheitsbezogene System 2 korrekt arbeitet.

## Patentansprüche

1. Verfahren zum Überwachen eines sicherheitsbezogenen Systems (2), welches zumindest aus mehreren Schichten (21 - 24) mit zumindest einer Hardwareschicht (21), einer Betriebssystemschicht (23) und einer Applikationsschicht (24) aufgebaut ist, mit den folgenden Schritten:
- Übermitteln eines Überwachungsergebnisses (b) eines ersten Prozesses (111) von einer Überwachungsvorrichtung (11) die zum Überwachen des sicherheitsbezogenen Systems (2) vorgesehen ist, an eine Vorrichtung (12), die zumindest einen Teil des sicherheitsbezogenen Systems (2) bildet, wobei der erste Prozess (111) aus einer Menge von Prozessen, die in der Überwachungsvorrichtung (11) gespeichert ist, bestimmt wird;
- Auswerten des Überwachungsergebnisses (b) durch einen zweiten Prozess (125), wobei der zweite Prozess (125) einen Prozess des sicherheitsbezogenen Systems (2) bildet und ein Prozess der Betriebssystemschicht (23) ist;
- Berechnen eines Bearbeitungsergebnisses (a) in Abhängigkeit des Überwachungsergebnisses (b); und
- Überprüfen des berechneten Bearbeitungsergebnisses (a).

2. Verfahren nach Anspruch 1, wobei für das Auswerten des Überwachungsergebnisses (b) eine vorbestimmten Zeit vorgesehen ist.

3. Verfahren nach Anspruch 2, wobei, wenn das Auswerten des ersten Überwachungsergebnisses (b) nicht innerhalb der dafür vorgesehenen Zeit erfolgt, das Auswerten des Überwachungsergebnisses (b) abgebrochen wird und ein erneutes Auswerten des Überwachungsergebnisses (b) durch den zweiten Prozess (125) erfolgt.

4. Verfahren nach Anspruch 2 oder 3, wobei ein Feststellen, ob das Auswerten des Überwachungsergebnisses (b) innerhalb der vorbestimmten Zeit erfolgt ist, in der Überwachungsvorrichtung (11) und/oder in der Vorrichtung (12) des sicherheitsbezogenen Systems (2) durchgeführt wird.

5. Verfahren nach einem der vorstehenden Ansprüche, wobei das Auswerten des Überwachungsergebnisses (b) ein Anwenden einer vorgegebenen Funktion des zweiten Prozesses (125) auf das Überwachungsergebnis (b) aufweist.

6. Verfahren nach einem der vorstehenden Ansprüche, wobei das Überprüfen des Bearbeitungsergebnisses (a) in der Überwachungsvorrichtung (11) durchgeführt wird.

7. Verfahren nach Anspruch 6, wobei das Bearbeitungsergebnis (a) von der Vorrichtung (12) des sicherheitsbezogenen Systems (2) an die Überwachungsvorrichtung (1) übertragen wird.

8. Verfahren nach einem der vorstehenden Ansprüche, wobei das Bearbeitungsergebnis (a) durch den ersten Prozess (111) überprüft wird.

9. Verfahren nach einem der vorstehenden Ansprüche, wobei, wenn das Überprüfen des Überwachungsergebnisses (a) ergibt, dass das Bearbeitungsergebnis (a) falsch ist, das sicherheitsbezogene System (2) angehalten wird.

10. Anordnung mit einem sicherheitsbezogenen System (2), welches zumindest aus mehreren Schichten (21 - 24) mit zumindest einer Hardwareschicht (21), einer Betriebssystemschicht (23) und einer Applikationsschicht (24) aufgebaut ist, und einem System (1) zum Überwachen des sicherheitsbezogenen Systems (2) mit:
- einer Überwachungsvorrichtung (11) auf der ein erster Prozess (111) abläuft, der ein Überwachungsergebnis (b) generiert, welches an eine weitere Vorrichtung (12), die zumindest einen Teil des sicherheitsbezogenen Systems (2) bildet, übertragen wird, wobei ein zweiter überwachter Prozess (125) des sicherheitsbezogenen Systems (2) ein Prozess der Betriebssystemschicht (23) ist und das empfangene Überwachungsergebnis (b) zur Berechnung eines Bearbeitungsergebnisses (a) an den ersten Prozess (111) zur Überprüfung zurückschickt; und
wobei der erste Prozess (111) aus einer Menge von Prozessen, die in der Überwachungsvorrichtung (11) gespeichert ist, bestimmt wird.

11. Computerprogramm, das eine Kodierung aufweist, die derart ausgestaltet ist, dass Schritte des Verfahrens nach einem der Ansprüche 1 bis 9 ausführbar sind.

12. Computerprogramm nach Anspruch 11, wobei das Computerprogramm auf einem Datenträger gespeichert ist.

13. Datenträger, der ein Computerprogramm nach Anspruch 12 aufweist.

## Claims

1. Method for monitoring a security-related system (2) which is constructed at least from a plurality of layers (21-24) with at least a hardware layer (21), an operating system layer (23) and an application layer (24), having the following steps of:
- transmitting a monitoring result (b) of a first process (111) from a monitoring apparatus (11), which is provided for the purpose of monitoring the security-related system (2), to an apparatus (12) which forms at least one part of the security-related system (2), the first process (111) being determined from a set of processes stored in the monitoring apparatus (11);
- evaluating the monitoring result (b) by means of a second process (125), the second process (125) forming a process of the security-related system (2) and being a process of the operating system layer (23);
- calculating a processing result (a) on the basis of the monitoring result (b); and
- checking the calculated processing result (a).

2. Method according to Claim 1, a predetermined time being provided for evaluating the monitoring result (b).

3. Method according to Claim 2, the evaluation of the monitoring result (b) being terminated and the monitoring result (b) being evaluated anew by means of the second process (125) if the first monitoring result (b) is not evaluated within the time provided for this purpose.

4. Method according to Claim 2 or 3, a determination of whether the monitoring result (b) has been evaluated within the predetermined time being carried out in the monitoring apparatus (11) and/or in the apparatus (12) of the security-related system (2).

5. Method according to one of the preceding claims, the evaluation of the monitoring result (b) involving applying a predefined function of the second process (125) to the monitoring result (b).

6. Method according to one of the preceding claims, the processing result (a) being checked in the monitoring apparatus (11).

7. Method according to Claim 6, the processing result (a) being transmitted from the apparatus (12) of the security-related system (2) to the monitoring apparatus (1).

8. Method according to one of the preceding claims, the processing result (a) being checked by means of the first process (111).

9. Method according to one of the preceding claims, the security-related system (2) being stopped if the checking of the processing result (a) reveals that the processing result (a) is incorrect.

10. Arrangement having a security-related system (2), which is constructed at least from a plurality of layers (21-24) with at least a hardware layer (21), an operating system layer (23) and an application layer (24), and a system (1) for monitoring the security-related system (2), having:
- a monitoring apparatus (11) on which a first process (111) runs, which process generates a monitoring result (b) which is transmitted to a further apparatus (12) which forms at least one part of the security-related system (2), a second monitored process (125) of the security-related system (2) being a process of the operating system layer (23) and sending the received monitoring result (b) for calculating a processing result (a) back to the first process (111) for checking; and
the first process (111) being determined from a set of processes stored in the monitoring apparatus (11).

11. Computer program having coding which is configured in such a manner that steps of the method according to one of Claims 1 to 9 can be carried out.

12. Computer program according to Claim 11, the computer program being stored on a data storage medium.

13. Data storage medium having a computer program according to Claim 12.

## Revendications

1. Procédé de surveillance d'un système (2) relatif à la sécurité qui est constitué au moins de plusieurs couches (21 à 24) ayant au moins une couche (21) matérielle, une couche (23) de système de fonctionnement et une couche (24) d'application, comprenant les stades suivantes :
- transmission d'un résultat (b) de surveillance d'un premier processus (111) d'un dispositif (11) de surveillance, qui est prévu pour surveiller le système (2) relatif à la sécurité, à un dispositif (12) qui forme au moins une partie du système (2) relatif à la sécurité, le premier processus (111) étant déterminé dans un ensemble de processus mémorisé dans le dispositif (11) de surveillance,
- exploitation du résultat (b) de surveillance par un deuxième processus (125), le deuxième processus (125) formant un processus du système (2) relatif à la sécurité et étant un processus de la couche (23) de système de fonctionnement,
- calcul d'un résultat (a) de traitement en fonction du résultat (b) de surveillance et
- vérification du résultat (a) de traitement calculé.

2. Procédé suivant la revendication 1, dans lequel une durée déterminée à l'avance est prévue pour l'exploitation du résultat (b) de surveillance.

3. Procédé suivant la revendication 2, dans lequel si l'exploitation du premier résultat (b) de surveillance ne s'effectue pas dans la durée prévue à cet effet, on interrompt l'exploitation de résultat (b) de surveillance et une exploitation renouvelée du résultat (b) de surveillance s'effectue par le deuxième processus (125).

4. Procédé suivant la revendication 2 ou 3, dans lequel on effectue une constatation du point de savoir si l'exploitation du résultat (b) de surveillance s'est effectuée dans la durée définie à l'avance dans le dispositif (11) de surveillance et/ou dans le dispositif (12) du système (2) relatif à la sécurité.

5. Procédé suivant l'une des revendications précédentes, dans lequel l'exploitation du résultat (b) de surveillance comprend l'application d'une fonction donnée à l'avance du deuxième processus (125) au résultat (b) de surveillance.

6. Procédé suivant l'une des revendications précédentes, dans lequel on effectue la vérification du résultat (a) de traitement dans le dispositif (11) de surveillance.

7. Procédé suivant la revendication 6, dans lequel on transmet le résultat (a) du dispositif (12) du système (2) relatif à la sécurité au dispositif (1) de surveillance.

8. Procédé suivant l'une des revendications précédentes, dans lequel on vérifie le résultat (a) du traitement par le premier processus (111).

9. Procédé suivant l'une des revendications précédentes, dans lequel, si la vérification du résultat (a) de surveillance indique que le résultat (a) de surveillance est faux, on arrête le système (2) relatif à la sécurité.

10. Agencement ayant un système (2) relatif à la sécurité, qui est constitué au moins de plusieurs couches (21 à 24) ayant au moins une couche (21) matérielle, une couche (23) de système de fonctionnement et une couche (24) d'application, et ayant un système de surveillance du système (2) relatif à la sécurité comprenant :
- un dispositif (11) de surveillance sur lequel se déroule un premier processus qui crée un résultat (b) de surveillance, lequel est transmis à un autre dispositif (12) qui forme au moins une partie du système (2) relatif à la sécurité, un deuxième processus (125) surveillé du système (2) relatif à la sécurité étant un processus de la couche du système de fonctionnement et le résultat (b) de surveillance qui est reçu est, pour le calcul d'un résultat (a) de traitement, envoyé pour vérification au premier processus (111) et
dans lequel le premier processus (111) est déterminé dans un ensemble de processus, qui est mémorisé dans le dispositif (11) de surveillance.

11. Programme d'ordinateur qui a un codage conformé de manière à pouvoir exécuter les stades du procédé suivant l'une des revendications 1 à 9.

12. Programme d'ordinateur suivant la revendication 11, dans lequel le programme d'ordinateur est mémorisé sur un support de données.

13. Support de données qui un programme d'ordinateur suivant la revendication 12.
